# EUROPÄISCHE PATENTSCHRIFT

(11) **EP 2 781 657 B1**
(45) Veröffentlichungstag und Bekanntmachung des Hinweises auf die Patenterteilung: **02.03.2016**
(21) Anmeldenummer: 14000893.9
(22) Anmeldetag: 12.03.2014
(51) Int. Cl.: E01C 19/48, B65G 41/00

(54) **Beschicker und Verfahren zum Umrüsten desselben**
Feeder and method for retrofitting the same
Chargeur et son procédé de rééquipement

(30) Priorität: 20.03.2013 DE 102013004757
(43) Veröffentlichungstag der Anmeldung: 24.09.2014
(73) Patentinhaber: Dynapac GmbH, 26203 Wardenburg (DE)
(72) Erfinder: Bippen, Rainer, 22089 Hamburg (DE); Joseph, Seby, 26203 Wardenburg (DE); Brammer, Hauke, 26197 Großenkneten (DE)
(74) Vertreter: Möller, Friedrich

(56) Entgegenhaltungen:
- EP-A2- 1 232 968
- US-B1- 6 386 352

## Beschreibung

Die Erfindung betrifft ein Verfahren zum Umrüsten eines Beschickers gemäß dem Oberbegriff des Anspruchs 1. Weiterhin betrifft die Erfindung einen Beschicker gemäß dem Oberbegriff des Anspruchs 6.

Beschicker dienen unter anderem dazu, Straßenfertiger mit Material zur Herstellung eines Straßenbelags zu versorgen. Lastkraftwagen transportieren das Material zu den Beschickern. Die Beschicker verfügen über Vorratsbehälter, die das Material zwischenspeichern und bedarfsgerecht zum jeweiligen Straßenfertiger transportieren. Die Beschicker als Zwischenspeicher lassen einen kontinuierlichen Betrieb des jeweiligen Straßenfertigers auch dann zu, wenn über längere Zeit von Lastkraftwagen kein Material angeliefert wird. Beschicker werden aber auch dazu eingesetzt, andere Baumaschinen, auch andere Straßenbaumaschinen, und Baustellen mit Material zu versorgen.

Vor allem größere Beschicker verfügen über einen Längsförderer, auch Verteilerband genannt, womit das Material vom Beschicker zum Straßenfertiger, insbesondere dem diesem zugeordneten Vorratsbehälter, transportiert wird. Der Längsförderer wird vielfach auch eingesetzt, um mehrere beispielsweise nebeneinanderfahrende Straßenfertiger mit Material zu versorgen. Auch gibt es Straßenfertiger, die eine verhältnismäßig große Abwurfhöhe für das Material erfordern. Vor allem zu den vorstehend genannten Zwecken müssen die Längsförderer relativ lang sein. Dadurch ist es zum Transport des Beschickers von einer Baustelle zur anderen erforderlich, den Längsförderer zu demontieren, so dass der Beschicker und der Längsförderer separat transportiert werden können. Aus EP 1 232 968 A2 ist eine Montagevorrichtung, die der Montage eines zusätzlichen Verteilerbandes an einen Beschicker dient, bekannt. Wenn das Verteilerband durch die Montagevorrichtung an die richtige Position bewegt wurde, wird diese über mehrere Steckbolzen am Beschicker gesichert. Aus US 6,386,352 B1 ist eine ähnliche Lösung bekannt, bei der ein zweiter Förderer an einen Hauptförderer nach der relativen Ausrichtung der beiden Förderer durch ein Achse miteinander verbunden werden. Das Demontieren und Montieren des Längsförderers ist somit zeitaufwendig und nicht einfach.

Der Erfindung liegt die Aufgabe zugrunde, einen Beschicker und ein Verfahren zum Umrüsten desselben zu schaffen, womit eine einfache und rasche Demontage und Montage des Längsförderers möglich ist.

Ein Verfahren zur Lösung dieser Aufgabe weist die Maßnahmen des Anspruchs 1 auf. Demnach ist es vorgesehen, durch Absenken den Längsförderer an das Fahrwerk des Beschickers anzuhängen, und zwar bevorzugt durch Einhaken. Vorzugsweise wird der Längsförderer senkrecht abgesenkt, um ihn am Fahrwerk des Beschickers anzuhängen. Ein solches Absenken kann einfach von einem Hebemittel erfolgen. Infolge des Einhängens wird die Verbindung zwischen dem Längsförderer und dem Fahrwerk des Beschickers automatisch, insbesondere zwangsweise, herbeigeführt.

Bevorzugt ist das Verfahren weitergebildet, indem nach dem Anhängen des Längsförderers an das Fahrwerk, wonach er hiermit noch lösbar verbunden ist, die Verbindung des Längsförderers mit dem Fahrwerk zusätzlich, vorzugsweise formschlüssig, zu sichern. Hierdurch erfolgt eine nicht ungewollt lösbare Verbindung des Längsförderers mit dem Fahrwerk, die nur lösbar ist, wenn zuvor die Sicherung mit entfernt worden ist.

Bei einer bevorzugten Ausgestaltung des Verfahrens ist es vorgesehen, zum Anhängen des Längsförderers an das Fahrwerk mindestens einen Vorsprung am Längsförderer in eine oben offene, korrespondierende Vertiefung am Fahrwerk oder eine unten offene Vertiefung am Längsförderer auf einen korrespondierenden Vorsprung am Fahrwerk abzusenken. Es wird so mindestens eine Einhakverbindung zwischen dem Längsförderer und dem Fahrwerk hergestellt, wenn beim Montieren der Längsförderer relativ zum Fahrwerk abgesenkt wird.

Eine vorteilhafte Weiterbildung des Verfahrens sieht es vor, dass der Längsförderer ein Kopplungsmittel aufweist. Der Längsförderer wird dann mit dem Kopplungsmittel am Fahrwerk eingehängt und/oder gesichert. Dann weist das Kopplungsmittel den mindestens einen Vorsprung oder die mindestens eine Vertiefung und wenigstens eine Sicherung zum ungewollten Lösen der mindestens einen hakenartigen Einhängung des Längsförderers mit dem Kopplungsmittel am Fahrwerk auf.

Ein Beschicker zur Lösung der eingangs genannten Aufgabe weist die Merkmale des Anspruchs 6 auf. Bei diesem Beschicker ist es vorgesehen, dass der Längsförderer durch mindestens eine Einhängung und wenigstens eine Verriegelung mit dem Fahrwerk vorzugsweise lösbar verbindbar ist. Durch die mindestens eine Einhängung kann der Längsförderer ohne Schrauben durch einfaches Absenken mit dem Fahrwerk des Beschickers verbunden werden. Die mindestens eine Einhängung zentriert den Längsförderer in der vorgesehenen Relativposition zum Fahrwerk. Danach kann die mindestens eine Sicherung, die beliebig ausgebildet sein kann, einfach und vor allem rasch erfolgen. Dabei hat die mindestens eine Sicherung nur die Aufgabe, den Längsförderer in der mindestens einen Einhängung am Fahrwerk zu arretieren, damit beim Betrieb des Beschickers ein ungewolltes Lösen der Verbindung des Längsförderers mit dem Fahrwerk nicht mehr möglich ist. Durch ein Lösen der mindestens einen Sicherung kann durch einfaches Aushängen der Längsförderer vom Fahrwerk des Beschickers demontiert werden.

Bevorzugt ist die mindestens eine Einhängung an einer anderen Stelle als die Sicherung angeordnet. Insbesondere ist über der wenigstens einen Verriegelung die Einhängung angeordnet, insbesondere im Wesentlichen senkrecht über der Verriegelung. Dadurch wird nach dem Einsetzen des Längsförderers in die mindestens eine Einhängung der Längsförderer positionsgenau durch sein Eigengewicht am Fahrwerk gehalten, so dass die jeweilige Verriegelung zur Sicherung des Längsförderers im am Fahrwerk angehängten Zustand einfach möglich ist, ohne dass dazu der Längsförderer noch in einem Hebezeug hängen muss.

Weiterhin ist es bevorzugt vorgesehen, dem Längsförderer ein Kopplungsmittel zuzuordnen bzw. den Längsförderer mit einem solchen Kopplungsmittel zu versehen. Dann ist der Längsförderer mit dem Kopplungsmittel durch die mindestens eine Einhängung und Verriegelung mit dem Fahrwerk verbindbar. Das Kopplungsmittel eignet sich dabei als Träger für Vorsprünge oder Vertiefungen der Einhängungen und als Träger von Teilen der Verriegelung.

Gemäß einer vorteilhaften Weiterbildung der Erfindung ist es vorgesehen, dass der Längsförderer direkt oder mit seinem Kopplungsmittel unbeweglich und/oder starr mit dem Fahrwerk verbindbar ist. Dadurch ist eine definierte und im Wesentlichen spielfreie Ankopplung des Längsförderers, insbesondere mit dem ihm zugeordneten Kopplungsmittel, am Fahrwerk gewährleistet. Der Längsförderer kann auf diese Weise keine unkontrollierten oder ungewollten Bewegungen relativ zum Fahrwerk ausüben.

Vorteilhafterweise ist die jeweilige Einhängung aus einer oben offenen Vertiefung am Fahrwerk und einem mit jeder Vertiefung korrespondierenden Vorsprung am Längsförderer oder das Kopplungsmittel versehen. Alternativ ist es auch denkbar, mindestens eine unten offene Vertiefung am Längsförderer oder am Kopplungsmittel vorzusehen, die mit einem Vorsprung am Fahrwerk korrespondiert. Auf diese Weise werden einfache Hakenverbindungen geschaffen, die sich einfach zusammensetzen und auch einfach wieder lösen lassen. Insbesondere ist es denkbar, dass die Vertiefungen zur offenen Seite hin sich V-artig erweitern und dadurch selbsttätig eine Zentrierung zwischen dem Vorsprung und der Vertiefung erfolgt.

Gemäß einer bevorzugten Ausgestaltung des Beschickers ist die jeweilige Verriegelung unter der ihr zugeordneten Einhängung als eine vorzugsweise in allen Richtungen wirksame formschlüssige Verbindung zwischen dem Längsförderer bzw. dem Kopplungsmittel und dem Fahrgestell ausgebildet. Außerdem ist die formschlüssige Verbindung solchermaßen dem Fahrgestell und dem Längsförderer bzw. dem Kopplungsmittel zugeordnet, dass die formschlüssige Verbindung nach dem Anhängen des Längsförderers, insbesondere des diesem zugeordneten Kopplungsmittels, an das Fahrwerk herstellbar ist. Auch werden die Komponenten jeder Verriegelung beim Herstellen der mindestens einen Einhängung derart zueinander ausgerichtet bzw. zentriert, dass ohne Positionsveränderungen des Längsförderers bzw. des Kopplungsmittels zum Fahrwerk die jeweilige Verriegelung herstellbar ist.

Bevorzugt ist es vorgesehen, dass der Längsförderer am Kopplungsmittel, vorzugsweise am vom Fahrwerk weggerichteten Endbereich des Kopplungsmittels, um eine vertikale oder leicht geneigte aufrechte Schwenkachse gelagert ist. Hierdurch kann der Längsförderer gegenüber dem Kopplungsmittel seitlich verschwenkt werden, und zwar zu entgegengesetzten Seiten. Dabei behält das Kopplungsmittel die durch die Einhängung und die Verriegelungen vorgegebene, festgelegte bzw. starre Position gegenüber dem Fahrwerk bei. Es ist also nur der Längsförderer verschwenkbar, aber nicht das Kopplungsmittel.

Weiterhin ist es bevorzugt vorgesehen, dem Längsförderer ein Schwenkmittel zuzuordnen, das um die aufrechte oder leicht geneigte Schwenkachse schwenkbar mit dem Kopplungsmittel verbunden ist, wobei der Längsförderer mit dem Schwenkmittel um eine horizontale Kippachse kippbar verbunden ist. Wenn der Längsförderer und die Kippachse verkippt werden, ist sein vom Fahrwerk weggerichtetes freies Ende, das Abwurfende, den Anforderungen entsprechend auf- und abbewegbar. Zum Auf- und Abwärtsschwenken des Abwurfendes des Längsförderers erfolgt nur eine Relativbewegung des Längsförderers zum Schwenkmittel, aber keine Relativbewegung des Schwenkmittels zum Kopplungsmittel. Alternativ ist es aber auch denkbar, den Längsförderer sowohl um die vertikale Schwenkachse als auch um die horizontale Schwenkachse, schwenkbar am Kopplungsmittel zu lagern. Das Schwenkmittel kann dann entfallen.

Eine andere vorteilhafte Ausgestaltung des Beschickers sieht es vor, dem Längsförderer einen Antrieb, vorzugsweise einen hydraulischen Antrieb, für seinen umlaufenden Förder-strang zuzuordnen. Bevorzugt ist der Antrieb einem vom Fahrwerk weggerichteten freien Abgabeende des Längsförderers zugeordnet. Durch den eigenen Antrieb kann der Längsförderer das Material gezielt dem Straßenfertiger zuführen, und zwar in veränderlicher Menge pro Zeiteinheit. Die Zuordnung des Antriebs zum freien Abgabeende des Längsförderers schafft am zum Fahrwerk weisenden Ende des Längsförderers Platz für die erforderlichen Einrichtungen zum seitlichen Verschwenken und Auf- und Abschwenken des Längsförderers. Außerdem kann der Antrieb zusammen mit dem Längsförderer montiert und demontiert werden.

Ein bevorzugtes Ausführungsbeispiel der Erfindung wird nachfolgend anhand der Zeichnung näher erläutert. In dieser zeigen.

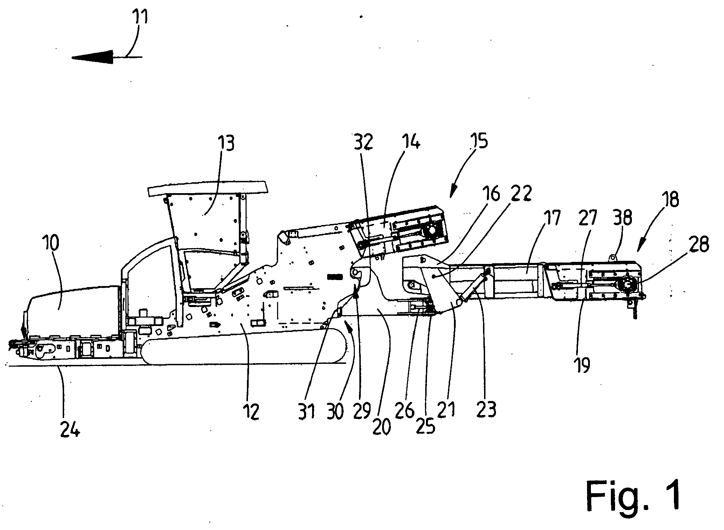

- Fig. 1: eine schematische Seitenansicht eines Beschickers mit einem daran montierten Längsförderer,
- Fig. 2: eine Seitenansicht des Beschickers der Fig. 1 bei demontiertem Längsförderer,
- Fig. 3: eine Ansicht analog zur Fig. 2 mit einem an einem Hebezeug angehängtem Längsförderer,
- Fig. 4: eine Ansicht analog zu den Fig. 2 und 3, bei vom Hebezeug angehobenem (frei schwebenden) Längsförderer, und
- Fig. 5: eine Ansicht analog zu den Fig. 2 bis 4 bei am Beschicker angehängtem, aber noch am Hebezeug hängenden, Längsförderer.

Der in den Figuren gezeigte Beschicker dient zum Beispiel dazu, einen oder auch mehrere nicht dargestellte Straßenfertiger mit Material zum Einbauen eines Straßenbelags zu versorgen. Das Material wird diskontinuierlich von üblicherweise Lastwagen antransportiert und in einen Vorratsbehälter 10 des Beschickers abgekippt. Vom Beschicker wird der Straßenfertiger bedarfsweise mit Material für den herzustellenden Straßenbelag versorgt. Der Straßenfertiger kann dadurch kontinuierlich und fortlaufend den Einbau des Straßenmaterials vornehmen, und zwar auch in Phasen, in denen momentan kein Material von Lastwagen antransportiert wird. Gegebenenfalls kann von einem Beschicker das Material auch auf mehrere Straßenfertiger verteilt werden.

Die Lastwagen kippen das Material in den in Einbaurichtung 11 des Straßenbelags gesehen vornliegenden Vorratsbehälter 10 des Beschickers ab. Vom Beschicker wird das Material dann bedarfsweise gegen die Einbaurichtung 11 zum rückwärtigen Ende desselben transportiert und von dort weitergefördert zum in Einbaurichtung 11 gesehen hinter dem Beschicker herfahrenden Straßenfertiger oder mehrere hintereinander bzw. nebeneinander hinter dem Beschicker herfahrenden Straßenfertiger. Bevorzugt wird das Material vom Beschicker in einen Vorratsbehälter des hinter ihm herfahrenden Straßenfertigers oder wechselweise in Vorratsbehälter mehrerer hinter dem Beschicker herfahrender Straßenfertiger abgeworfen.

Der hier gezeigte Beschicker ist selbstfahrend ausgebildet. Er verfügt über ein Chassis bzw. Fahrwerk 12, bei dem es sich im gezeigten Ausführungsbeispiel um ein Raupenfahrwerk handelt. Der Beschicker kann aber auch über ein Radfahrwerk verfügen. In Einbaurichtung 11 gesehen ist an der Vorderseite des Beschickers der Vorratsbehälter 10 angeordnet. Üblicherweise weist der Vorratsbehälter 10 des Beschickers ein größeres Fassungsvolumen auf als der Vorratsbehälter eines üblichen Straßenfertigers. In Einbaurichtung 11 gesehen hinter dem Vorratsbehälter 10 verfügt der Beschicker über eine nicht näher gezeigte Primärantriebsquelle, beispielsweise einen Dieselmotor, und dahinter über einen Bedienstand 13. Durch einen nicht gezeigten Zwischenförderer, üblicherweise einen Kratzerförderer, wird das Material aus dem Vorratsbehälter 10 gegen die in Einbaurichtung 11 zur Rückseite des Fahrwerks 12 transportiert. Das Material gelangt dann auf einen Stetigförderer 14, der als Gurtförderer oder auch als Kratzerförderer ausgebildet sein kann. Von einem in Einbaurichtung 11 gesehen hinteren und zum nachfolgenden Straßenfertiger weisenden Abwurfende 15 des Stetigförderers 14 gelangt das zur Herstellung des Straßenbelags dienende Material entweder direkt in den Vorratsbehälter eines nachfolgenden Straßenfertigers oder (gemäß der Darstellung in den Zeichnungen) auf das vordere Aufgabeende 16 eines Längsförderers 17. Der Längsförderer 17 wird überwiegend verwendet, um das Material auf mehrere dem Beschicker nachfolgende Straßenfertiger zu verteilen. Deswegen wird der Längsförderer 17 im Fachjargon auch als "Verteilerband" bezeichnet. Das zur Herstellung eines Straßenbelags dienende Material wird von einem hinteren Abwurfende 18 des Längsförderers 17 in den Vorratsbehälter des jeweils zu beschickenden Straßenfertigers abgeworfen. Der Längsförderer 17 wird beim Beschicker auch dann verwendet, wenn große Straßenfertiger zur Herstellung relativ breiter Straßenbeläge oder Mehrschichtenfertiger mit recht hoch angeordneten Vorratsbehältern mit Material beschickert werden sollen.

Zum Transport des Beschickers von einer Baustelle zur anderen oder wenn ein Straßenfertiger direkt vom Abwurfende 15 des Stetigförderers 14 mit Material versorgt werden soll, muss der Längsförderer 17 vom Fahrwerk 12 des Beschickers abgebaut werden. Die Erfindung befasst sich mit einer Vereinfachung der Demontage und Montage des Längsförderers 17 bzw. des Verteilerbandes.

Der hier gezeigte Längsförderer ist gebildet aus dem eigentlichen länglichen Stetigförderer 19 mit einem umlaufenden Fördergurt, einem Kopplungsmittel 20 und einem Schwenkmittel 21. Im Bereich seines Aufgabeendes 16 ist der Längsförderer 17 um eine horizontale Kippachse 22 neigungsveränderlich am Schwenkmittel 21 gelagert. Auf gegenüberliegenden Seiten des Längsförderers 17 sind Druckmittelzylinder, insbesondere Hydraulikzylinder 23, vorgesehen. Jeder Hydraulikzylinder 23 ist mit einem zum Fahrwerk 12 weisenden Ende gelenkig am Schwenkmittel 21 und mit dem gegenüberliegenden Ende gelenkig an einem Rand des Längsförderers 17 befestigt. Durch gleichsinniges Einund Ausfahren der Hydraulikzylinder 23 ist die Neigung des Längsförderers 17 gegenüber dem Schwenkmittel 21 in entgegengesetzten Richtungen veränderbar, wodurch die Höhe des Abwurfendes 18 des Stetigförderers 19 gegenüber dem Untergrund 24, auf dem der Beschicker verfahrbar ist, veränderbar ist.

Der Längsförderer 17 ist mit dem Schwenkmittel 21 um eine vertikale Schwenkachse 25 verschwenkbar am Kopplungsmittel 20 gelagert. Zwei gegenüberliegende Druckmittelzylinder, insbesondere Hydraulikzylinder 26, sind auf gegenüberliegenden Seiten zwischen dem Kopplungsmittel 20 und dem Schwenkmittel 21 angeordnet. Die Hydraulikzylinder 26 sind einerseits gelenkig am Kopplungsmittel 20 und andererseits gelenkig am Schwenkmittel 21 befestigt. Durch gegensinniges Ein- und Ausfahren der beiden Hydraulikzylinder 26 wird der Längsförderer 17 mit dem Schwenkmittel 21 um die vertikale Schwenkachse 25 verschwenkt, um beispielsweise das Abwurfende 18 des Längsförderers 17 über den Vorratsbehälter verschiedener nebeneinander herfahrender Straßenfertiger zu positionieren und so abwechselnd mehrere Straßenfertiger mit Material zur Herstellung des Straßenbelags versorgen zu können. Das Kopplungsmittel 20 und das Schwenkmittel 21 sind so bemessen, dass in allen Schwenk- und Kippstellungen des Stetigförderers 19 vom Abwurfende 15 des Stetigförderers 14 Material zur Herstellung des Straßenbelags auf das Aufgabeende 16 des Längsförderers 17 abwerfbar ist.

Dem Abwurfende 18 des Längsförderers 17 ist im gezeigten Ausführungsbeispiel eine in Längsrichtung des Längsförderers 17 verschiebbare Spanntrommel zugeordnet. Vorzugsweise ist die Spanntrommel durch Druckmittelzylinder, im gezeigten Ausführungsbeispiel Hydraulikzylinder 27, in Längsrichtung des Längsförderers 17 verschiebbar. Die Spanntrommel ist gleichzeitig als Antriebstrommel ausgebildet. Dazu ist einer Stirnseite der Spanntrommel ein Antrieb zugeordnet. Im gezeigten Ausführungsbeispiel handelt es sich hierbei um einen drehzahfveränderlichen Hydraulikmotor 28. Es können aber auch andere Antriebe vorgesehen sein, beispielsweise Elektromotoren.

Der Längsförderer 17 ist mit seinem Kopplungsmittel 20 an die Rückseite des Fahrwerks 12 des Beschickers ankoppelbar. Zu diesem Zweck sind beim gezeigten Beschicker zwei beabstandete Einhängungen 29 und zwei beabstandete Verriegelungen 30 vorgesehen. Die Verriegelungen 30 befinden sich an anderen Stellen als die Einhängungen 29, vorzugsweise unterhalb der Einhängungen 29. Die Einhängungen 29 und die Verriegelungen 30 befinden sich zwischen einer Querseite 31 an der Rückseite (in Einbaurichtung 11 gesehen) des Fahrwerks 12 und einer Querseite 32 an der zum Fahrwerk 12 weisenden Vorderseite des Kopplungsmittels 20. Die beiden gleich ausgebildeten Einhängungen 29 sind hakenartig ausgebildet, und zwar derart, dass vorzugsweise nur durch Absenken des Längsförderers 17 mit dem Kopplungsmittel 20 und dem Schwenkmittel 21 gegenüber dem Fahrwerk 12 der Längsförderer 17 mit dem Kopplungsmittel 20 hinten am Fahrwerk 12 automatisch angehängt bzw. eingehakt wird. Zu diesem Zweck sind im gezeigten Ausführungsbeispiel an der hinteren Querseite 31 des Fahrwerks 12 zwei oben offene Vertiefungen 33 fest angeordnet, und zwar eine Vertiefung 33 pro Einhängung 29. Jede oben offene Vertiefung 33 am Fahrwerk 12 bildet eine Art offenen Haken. Mit jeder hakenartigen Vertiefung 33 korrespondiert ein Vorsprung vor der Querseite 32 des Kopplungsmittels 20. Jeder Vorsprung 34 ist aus einem horizontalen Bolzen gebildet. Der Bolzen ist an gegenüberliegenden Enden mit Laschen mit geringem parallelen Abstand zur Querseite 32 des Kopplungsmittels 20 befestigt. Die Vorsprünge 34 korrespondieren mit den Vertiefungen 33 derart, dass beim Absenken des Längsförderers 17 mit den an seinem Kopplungsmittel 20 befestigten Vorsprüngen 34 Letztere von oben in Eingriff mit den haken- bzw. klauenartigen Vertiefungen 33 kommen. Durch sich zum oben offenen Ende erweiternde Vertiefungen 33 erfolgt beim Einsetzen der Vorsprünge 34 in die Vertiefungen 33 während des Absenkens des Längsförderers 17 mit dem Kopplungsmittel 20 eine selbsttätige Ausrichtung und Zentrierung der Vorsprünge 34 relativ zu den Vertiefungen 33.

Die unter den Einhängungen 29 angeordneten Verriegelungen 30 sind so ausgebildet, dass sie eine in allen Richtungen formschlüssige Verbindung zwischen der hinteren Querseite 31 des Fahrwerks 12 und der vorderen Querseite 32 des Kopplungsmittels 20 herbeiführen. Im einfachsten Falle kann jede Verriegelung 30 durch mindestens eine Verschraubung gebildet sein. Es ist aber auch denkbar, jede Verriegelung 30 durch mindestens eine Lasche an der hinteren Querscheite 31 des Fahrwerks 12 und wenigstens eine damit korrespondierende Lasche an der vorderen Querseite 32 des Kopplungsmittels 20 zu bilden, wobei die Laschen fluchtende Durchgangsbohrungen aufweisen, durch die ein quergerichteter Sicherungsbolzen hindurchgesteckt wird. Dieses kann manuell, aber auch automatisiert erfolgen, beispielsweise durch Hydraulikzylinder, dessen Kolbenstangen den jeweiligen Bolzen bilden.

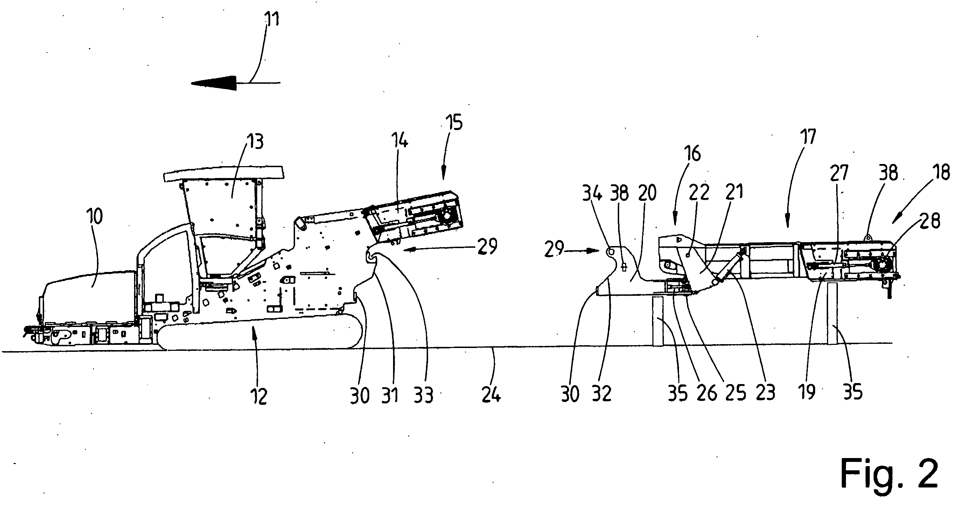

Nachfolgend wird das Verfahren zum Umrüsten des Beschickers, nämlich das Montieren des Längsförderers 17 mit dem Kopplungsmittel 20 und dem Schwenkmittel 21 am Fahrwerk 12, näher beschrieben:
In der in der Fig. 2 gezeigten Ausgangsstellung ruht der Längsförderer 17 mit dem Kopplungsmittel 20 und dem Schwenkmittel 21 etwa horizontal ausgerichtet auf mindestens zwei Auflagern 35. Gegebenenfalls kann der Längsförderer 17 mit dem Kopplungsmittel 20 und dem Schwenkmittel 21 aber auch direkt auf dem Untergrund 24 aufliegen oder sich auf einem Transportgerät, beispielsweise einem Tieflader, befinden.

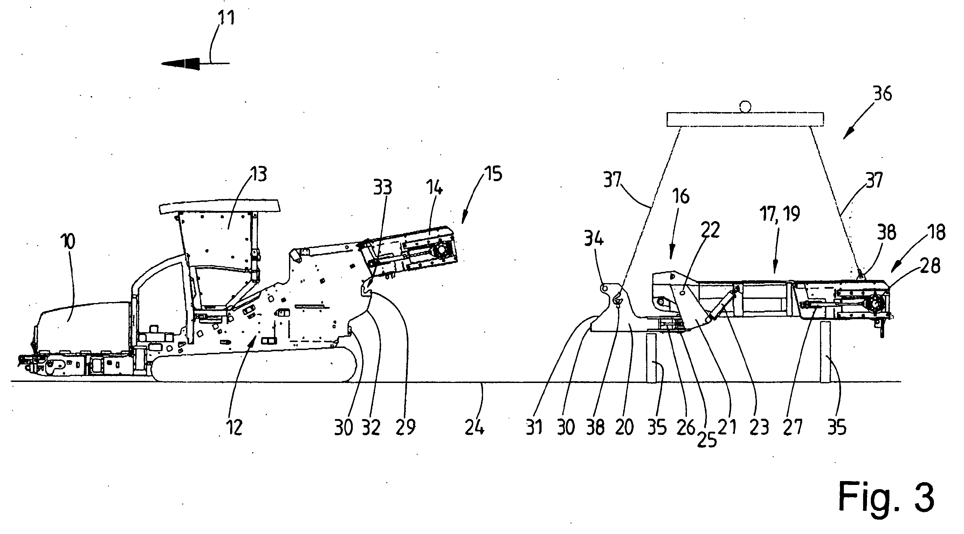

Der abgesetzte Längsförderer 17 mit dem Kopplungsmittel 20 und dem Schwenkmittel 21 wird nun zur Montage am Beschicker an einem Hebemittel, beispielsweise einem Kran, befestigt. Vom Hebemittel sind in den Fig. 3 bis 5 nur das Anschlagmittel 36 mit vier Seilen 37 dargestellt. Die Enden der Seile 37 sind lösbar mit zwei Anschlagösen 38 im Bereich des Abwurfendes 18 des Längsförderers 17 und zwei Anschlagösen 38 am Kopplungsmittel 20 eingehängt.

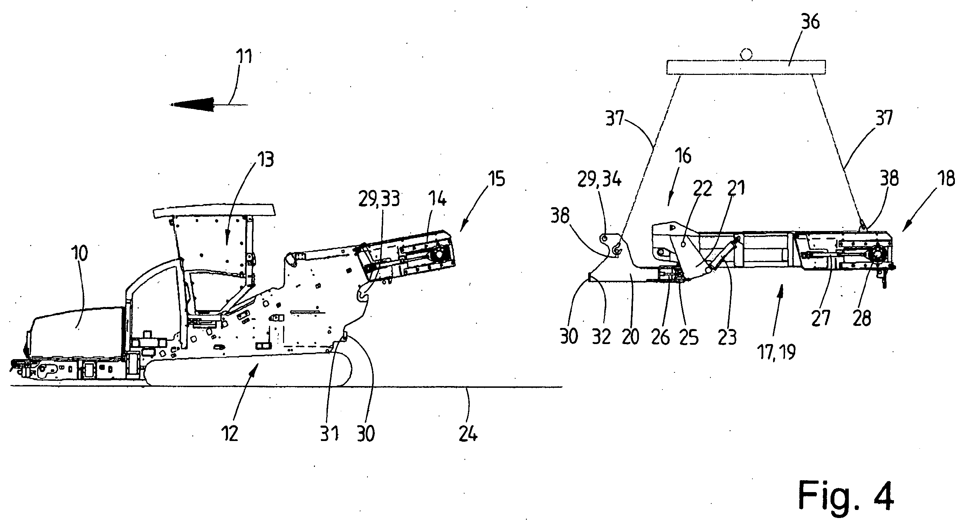

Vom Kran oder dergleichen wird nun der Längsförderer 17 mit dem Kopplungsmittel 20 und dem Schwenkmittel 21 angehoben, so dass er von den Auflagern 35 frei kommt. Der Längsförderer 17 mit dem Kopplungsmittel 20 und dem Schwenkmittel 21 wird soweit angehoben, dass er durch ein späteres Absenken mit den Vorsprüngen 34 in die Vertiefungen 33 hinter dem Fahrwerk 12 des Beschickers einhängbar bzw. einhakbar ist. Diesen angehobenen Zustand des Längsförderers 17 mit dem Kopplungsmittel 20 und dem Schwenkmittel 21 zeigt die Fig. 4.

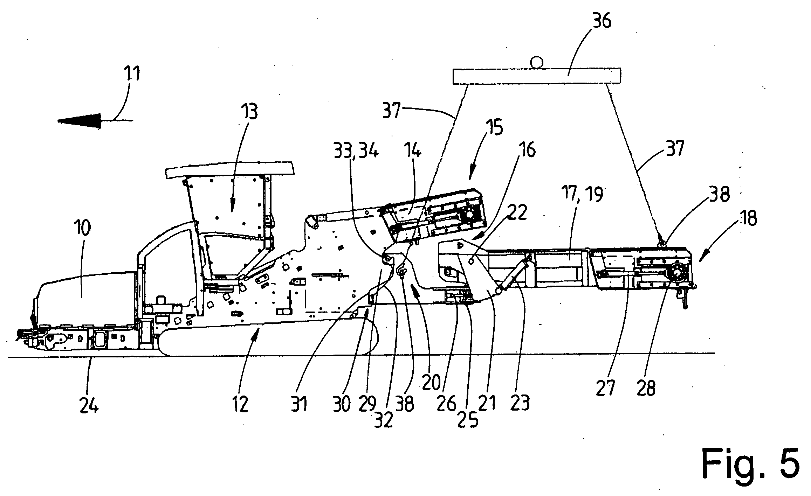

Vom Kran oder dergleichen wird nun der daran vorzugsweise horizontal ausgerichtete Längsförderer 17 mit dem Kopplungsmittel 20 und dem Schwenkmittel 21 an die Rückseite des Fahrwerks 12 des Beschickers heranbewegt, zum Beispiel herangeschwenkt, und zwar so weit, dass sich die Vorsprünge 34 am Kopplungsmittel 20 über den Vertiefungen 33 der Haken an der Rückseite des Fahrwerks 12 befinden. Durch anschließendes Absenken des Längsförderers 17 mit dem Kopplungsmittel 20 und dem Schwenkmittel 21 gelangen die Vorsprünge 34 selbsttätig und ohne zusätzliche Maßnahmen in die Vertiefungen 33 der Haken an der Rückseite des Fahrwerks 12. Dadurch ist der Längsförderer 17 mit dem Kopplungsmittel 20 und dem Schwenkmittel 21 am Fahrwerk 12 des Beschickers vormontiert, wie das die Fig. 5 veranschaulicht. Nach einem weiteren Absenken des Krans oder dergleichen hängt der vormontierte Längsförderer 17 mit dem Kopplungsmittel 20 und dem Schwenkmittel 21 bereits am Fahrwerk 12 des Beschickers. Es werden nur noch die Verriegelungen 30 unter den Einhängungen 29 hergestellt durch Schrauben, Bolzen, hydraulisch oder dergleichen. Die Sicherung kann hergestellt werden, wenn die Seile 37 noch mit den Anschlagösen 38 am Kopplungsmittel 20 und am Längsförderer 17 verbunden sind. Gegebenenfalls können die Seile 37 zur Herstellung der Verriegelungen 30 schon entlastet sein. Es ist auch denkbar, dass die Verriegelungen 30 erst erfolgen, wenn die Seile 37 des Anschlagmittels 36 schon von den Anschlagösen 38 am Kopplungsmittel 20 und am Längsförderer 17 gelöst sind.

Nach dem Anhängen und Sichern des Längsförderers 17 mit dem Kopplungsmittel 20 und dem Schwenkmittel 21 am Fahrwerk 12 des Beschickers sind nur noch Hydraulikanschlüsse und/oder Elektroanschlüsse zwischen dem Beschicker und dem Längsförderer 17, dem Kopplungsmittel 20 und dem Schwenkmittel 21 herzustellen. Die elektrischen Leitungen zum Längsförderer 17 gehen aus von mindestens einem Interface am Beschicker.

Die Demontage des Längsförderers 17 mit dem Kopplungsmittel 20 und dem Schwenkmittel 21 erfolgt in umgekehrter Reihenfolge wie die zuvor beschriebene Montage.

Die Erfindung eignet sich auch für Abhandlungen des zuvor beschriebenen Beschickers, bei denen der Längsförderer 17 entweder nur ein Kopplungsmittel 20, aber kein Schwenkmittel 21, aufweist oder der Längsförderer 17 so ausgebildet ist, dass er direkt ohne das Kopplungsmittel 20 und/oder ohne das Schwenkmittel 21 hinten am Fahrwerk 12 des Beschickers mit Einhängungen 29 und Verriegelungen 30 befestigbar ist.

**Bezugszeichenliste:**

| | | | |
|---|---|---|---|
| 10 | Vorratsbehälter | 36 | Anschlagmittel |
| 11 | Einbaurichtung | 37 | Seil |
| 12 | Fahrwerk | 38 | Anschlagöse |
| 13 | Bedienstand | | |
| 14 | Stetigförderer | | |
| 15 | Abwurfende | | |
| 16 | Aufgabeende | | |
| 17 | Längsförderer | | |
| 18 | Abwurfende | | |
| 19 | Stetigförderer | | |
| 20 | Kopplungsmittel | | |
| 21 | Schwenkmittel | | |
| 22 | Kippachse | | |
| 23 | Hydraulikzylinder | | |
| 24 | Untergrund | | |
| 25 | Schwenkachse | | |
| 26 | Hydraulikzylinder | | |
| 27 | Hydraulikzylinder | | |
| 28 | Hydraulikmotor | | |
| 29 | Einhängung | | |
| 30 | Verriegelung | | |
| 31 | Querseite | | |
| 32 | Querseite | | |
| 33 | Vertiefung | | |
| 34 | Vorsprung | | |
| 35 | Auflager | | |

## Patentansprüche

1. Verfahren zum Umrüsten eines Beschickers, wobei ein Längsförderer (17) vom Fahrwerk (12) des Beschickers abgebaut und zur Inbetriebnahme wieder angebaut wird, und zum An- bzw. Abbauen der Längsförderer (17) von einer Hebeeinrichtung gehandhabt wird, **dadurch gekennzeichnet, dass** durch ein von der Hebeeinrichtung erfolgendes Manövrieren der Längsförderer (17) selbsttätig am Fahrwerk (12) angehängt wird.

2. Verfahren nach Anspruch 1, **dadurch gekennzeichnet, dass** durch ein von der Hebeeinrichtung erfolgendes Absenken des Längsförderers (17) gegenüber dem Fahrwerk (12) der Längsförderer (17) am Fahrwerk (12) angehängt wird.

3. Verfahren nach Anspruch 1 oder 2, **dadurch gekennzeichnet, dass** nach dem Anhängen des Längsförderers (17) an das Fahrwerk (12) des Beschickers eine Sicherung des Längsförderers (17) im eingehängten Zustand am Fahrwerk (12) erfolgt.

4. Verfahren nach einem der vorhergehenden Ansprüche, **dadurch gekennzeichnet, dass** zum Anhängen des Längsförderers (17) an das Fahrwerk (12) mindestens ein dem Längsförderer (17) zugeordneter Vorsprung (34) in eine oben offene korrespondierende Vertiefung (33) am Fahrwerk (12) oder eine dem Längsförderer (17) zugeordnete unten offene Vertiefung auf einen korrespondierenden Vorsprung am Fahrwerk (12) abgesetzt wird.

5. Verfahren nach einem der vorhergehenden Ansprüche, **dadurch gekennzeichnet, dass** der Längsförderer (17) ein Kopplungsmittel (20) aufweist bzw. dem Längsförderer (17) das Kopplungsmittel (20) zugeordnet ist und mit dem Kopplungsmittel (20) der Längsförderer (17) am Fahrwerk (12) angehängt und/oder gesichert wird.

6. Beschicker mit einem Fahrwerk (12), dem in Einbaurichtung (11) gesehen vorn ein Vorratsbehälter (10) zur Aufnahme eines Materialvorrats zugeordnet ist, mit einem hinteren Längsförderer (17), der am Fahrwerk (12) befestigbar ist, und mit mindestens einem das Material vom Vorratsbehälter (10) zum Längsförderer (17) transportierenden Förderer, **dadurch gekennzeichnet, dass** der Längsförderer (17) durch mindestens eine Einhängung (29) und wenigstens eine Verriegelung (30) mit dem Fahrwerk (12) verbindbar ist.

7. Beschicker nach Anspruch 6, **dadurch gekennzeichnet, dass** mindestens eine Einhängung (29) an einer Stelle und die wenigstens eine Verriegelung (30) an einer anderen Stelle angeordnet ist.

8. Beschicker nach Anspruch 6 oder 7, **dadurch gekennzeichnet, dass** dem Längsförderer (17) ein Kopplungsmittel (20) zugeordnet ist, und der Längsförderer (17) mit dem Kopplungsmittel (20) mit der mindestens einen Einhängung (29) und der wenigstens einen Verriegelung (30) mit dem Fahrwerk (12) verbindbar ist.

9. Beschicker nach einem der Ansprüche 6 bis 8, **dadurch gekennzeichnet, dass** der Längsförderer (17) direkt oder mit dem Kopplungsmittel (20) unbeweglich und/oder starr mit dem Fahrwerk (12) verbindbar ist.

10. Beschicker nach einem der Ansprüche 6 bis 9, **dadurch gekennzeichnet, dass** die oder jede Einhängung (29) mit einer oben offenen Vertiefung (33) am Fahrwerk (12) und einem Vorsprung (34) am Kopplungsmittel (20) korrespondiert oder eine unten offene Vertiefung am Kopplungsmittel (20) mit einem Vorsprung am Fahrwerk (12) korrspondiert.

11. Beschicker nach einem der Ansprüche 6 bis 10, **dadurch gekennzeichnet, dass** die Verriegelung (30) als eine wirksame formschlüssige Verbindung zwischen dem Kopplungsmittel (20) mit dem Fahrgestell (12) ausgebildet ist und die jeweilige formschlüssige Verriegelung (30) dem Fahrgestell (12) und dem Kopplungsmittel (20) zugeordnet ist, wobei die jeweilige Verriegelung (30) nach dem Einhängen des oder jedes Vorsprungs (34) in die damit korrespondierende Vertiefung (33) herstellbar ist.

12. Beschicker nach einem der Ansprüche 6 bis 11, **dadurch gekennzeichnet, dass** der Längsförderer (17) am Kopplungsmittel (20) um eine vertikale oder leicht geneigte Schwenkachse (25) gelagert ist.

13. Beschicker nach Anspruch 12, **dadurch gekennzeichnet, dass** dem Längsförderer (17) ein Schwenkmittel (21) zugeordnet ist, das um die Schwenkachse (25) schwenkbar mit dem Kopplungsmittel (20) verbunden ist, und der Längsförderer (17) mit dem Schwenkmittel (21) um eine horizontale Kippachse (22) schwenkbar verbunden ist.

14. Beschicker nach Anspruch 13, **dadurch gekennzeichnet, dass** zwischen dem Kopplungsmittel (20) und dem Schwenkmittel (21) mindestens ein Linearantrieb zum seitlichen Verschwenken des Längsförderers (17) mit dem Schwenkmittel (21) um die Schwenkachse (25), und zwischen dem Schwenkmittel (21) und dem Längsförderer (17) wenigstens ein Linearantrieb zum Auf- und Abschwenken des Längsförderers (17) um die Kippachse (22) vorgesehen sind.

15. Beschicker nach einem der Ansprüche 6 bis 14, **dadurch gekennzeichnet, dass** dem Längsförderer (17) ein Antrieb für seinen umlaufenden Förderer zugeordnet ist, wobei gegebenenfalls der Antrieb einem vom Fahrwerk (12) weggerichteten Abwurfende (18) des Längsförderers (17) zugeordnet ist.

## Claims

1. Method for conversion of a feeding appliance, wherein a longitudinal conveyor (17) is detached from the running gear (12) of the feeding appliance and, for commencement of operation, is attached again, and, for the attachment and detachment, the handling of the longitudinal conveyor (17) is performed by a lifting device, **characterized in that** the longitudinal conveyor (17) is automatically hooked onto the running gear (12) by means of manoeuvring performed by the lifting device.

2. Method according to Claim 1, **characterized in that** the longitudinal conveyor (17) is hooked onto the running gear (12) by virtue of the longitudinal conveyor (17) being lowered relative to the running gear (12) by the lifting device.

3. Method according to Claim 1 or 2, **characterized in that,** after the hooking-on of the longitudinal conveyor (17) onto the running gear (12) of the feeding appliance, the longitudinal conveyor (17) is secured in the hooked-in state on the running gear (12).

4. Method according to one of the preceding claims, **characterized in that,** for the hooking-on of the longitudinal conveyor (17) onto the running gear (12), at least one projection (34) assigned to the longitudinal conveyor (17) is placed into an upwardly open, corresponding depression (33) on the running gear (12), or a downwardly open depression assigned to the longitudinal conveyor (17) is placed onto a corresponding projection on the running gear (12).

5. Method according to one of the preceding claims, **characterized in that** the longitudinal conveyor (17) has a coupling means (20) or the longitudinal conveyor (17) is assigned the coupling means (20), and the longitudinal conveyor (17) is hooked onto and/or secured on the running gear (12) by way of the coupling means (20).

6. Feeding appliance having a running gear (12) which is assigned, at the front as viewed in a paving direction (11), a storage container (10) for accommodating a supply of material, having a rear longitudinal conveyor (17) which is fastenable to the running gear (12), and having at least one conveyor that transports the material from the storage container (10) to the longitudinal conveyor (17), **characterized in that** the longitudinal conveyor (17) is connectable to the running gear (12) by way of at least one hooking-in means (29) and at least one locking means (30).

7. Feeding appliance according to Claim 6, **characterized in that** at least one hooking-in means (29) is arranged at one location and the at least one locking means (30) is arranged at a different location.

8. Feeding appliance according to Claim 6 or 7, **characterized in that** the longitudinal conveyor (17) is assigned a coupling means (20), and the longitudinal conveyor (17) with the coupling means (20) is connectable to the running gear (12) by way of the at least one hooking-in means (29) and the at least one locking means (30).

9. Feeding appliance according to one of Claims 6 to 8, **characterized in that** the longitudinal conveyor (17), directly or with the coupling means (20), is immovably and/or rigidly connectable to the running gear (12).

10. Feeding appliance according to one of Claims 6 to 9, **characterized in that** the or each hooking-in means (29) corresponds to an upwardly open depression (33) on the running gear (12) and a projection (34) on the coupling means (20), or a downwardly open depression on the coupling means (20) corresponds to a projection on the running gear (12).

11. Feeding appliance according to one of Claims 6 to 10, **characterized in that** the locking means (30) acts in the form of a positively locking connection between the coupling means (20) and the running gear (12), and the respective positive locking means (30) is assigned to the running gear (12) and to the coupling means (20), wherein the respective locking means (30) can be engaged after the hooking-in of the or each projection (34) into the corresponding depression (33).

12. Feeding appliance according to one of Claims 6 to 11, **characterized in that** the longitudinal conveyor (17) is supported on the coupling means (20) about a vertical or slightly inclined pivot axis (25).

13. Feeding appliance according to Claim 12, **characterized in that** the longitudinal conveyor (17) is assigned a pivoting means (21) which is connected to the coupling means (20) pivotably about the pivot axis (25), and the longitudinal conveyor (17) is connected to the pivoting means (21) pivotably about a horizontal tilt axis (22).

14. Feeding appliance according to Claim 13, **characterized in that,** between the coupling means (20) and the pivoting means (21), there is provided at least one linear drive for lateral pivoting of the longitudinal conveyor (17) with the pivoting means (21) about the pivot axis (25), and, between the pivoting means (21) and the longitudinal conveyor (17), there is provided at least one linear drive for pivoting the longitudinal conveyor (17) up and down about the tilt axis (22).

15. Feeding appliance according to one of Claims 6 to 14, **characterized in that** the longitudinal conveyor (17) is assigned a drive for its encircling conveyor, wherein, if appropriate, the drive is assigned to an offloading end (18), which is directed away from the running gear (12), of the longitudinal conveyor (17).

## Revendications

1. Procédé de rééquipement d'un alimenteur, un transporteur longitudinal (17) étant démonté du châssis (12) de l'alimenteur et remonté pour sa mise en service, et pour le démontage et le montage, le transporteur longitudinal (17) étant manipulé par un dispositif de levage, **caractérisé en ce que** par une manoeuvre effectuée par le dispositif de levage, le transporteur longitudinal (17) est automatiquement accroché au châssis (12).

2. Procédé selon la revendication 1, **caractérisé en ce que** par l'abaissement du transporteur longitudinal (17) par rapport au châssis (12), effectué par le dispositif de levage, le transporteur longitudinal (17) est accroché au châssis (12).

3. Procédé selon la revendication 1 ou 2, **caractérisé en ce qu'**après l'accrochage du transporteur longitudinal (17) au châssis (12) de l'alimenteur, une fixation du transporteur longitudinal (17) au châssis (12) à l'état accroché est réalisée.

4. Procédé selon l'une quelconque des revendications précédentes, **caractérisé en ce que** pour l'accrochage du transporteur longitudinal (17) au châssis (12), au moins une saillie (34) associée au transporteur longitudinal (17) est déposée dans un renfoncement correspondant ouvert vers le haut (33) au niveau du châssis (12) ou un renfoncement ouvert vers le bas associé au transporteur longitudinal (17) est déposé sur une saillie correspondante sur le châssis (12).

5. Procédé selon l'une quelconque des revendications précédentes, **caractérisé en ce que** le transporteur longitudinal (17) présente un moyen d'accouplement (20) ou le moyen d'accouplement (20) est associé au transporteur longitudinal (17) et le transporteur longitudinal (17) est accroché et/ou fixé au châssis (12) par le moyen d'accouplement (20).

6. Alimenteur comprenant un châssis (12) auquel est associé, vu dans une direction d'installation (11) à l'avant, un réservoir (10) pour recevoir une réserve de matériau, avec un transporteur longitudinal arrière (17) qui peut être fixé au châssis (12), et avec au moins un transporteur transportant le matériau depuis le réservoir (10) jusqu'au transporteur longitudinal (17), **caractérisé en ce que** le transporteur longitudinal (17) peut être connecté au châssis (12) par le biais d'au moins un élément d'accrochage (29) et d'au moins un verrouillage (30).

7. Alimenteur selon la revendication 6, **caractérisé en ce qu'**au moins un élément d'accrochage (29) est disposé à un endroit et l'au moins un verrouillage (30) est disposé à un autre endroit.

8. Alimenteur selon la revendication 6 ou 7, **caractérisé en ce qu'**un moyen d'accouplement (20) est associé au transporteur longitudinal (17), et le transporteur longitudinal (17) peut être connecté au châssis (12) par le moyen d'accouplement (20) avec l'au moins un élément d'accrochage (29) et l'au moins un verrouillage (30).

9. Alimenteur selon l'une quelconque des revendications 6 à 8, **caractérisé en ce que** le transporteur longitudinal (17) peut être connecté au châssis (12) directement ou par le moyen d'accouplement (20) de manière immuable et/ou rigidement.

10. Alimenteur selon l'une quelconque des revendications 6 à 9, **caractérisé en ce que** l'élément ou chaque élément d'accrochage (29) correspond à un renfoncement ouvert vers le haut (33) sur le châssis (12) et à une saillie (34) sur le moyen d'accouplement (20) ou un renfoncement ouvert vers le bas sur le moyen d'accouplement (20) correspond à une saillie sur le châssis (12).

11. Alimenteur selon l'une quelconque des revendications 6 à 10, **caractérisé en ce que** le verrouillage (30) est réalisé sous forme de liaison active par engagement par correspondance géométrique entre le moyen d'accouplement (20) et le châssis (12) et le verrouillage par engagement par correspondance géométrique respectif (30) est associé au châssis (12) et au moyen d'accouplement (20), le verrouillage respectif (30) pouvant être réalisé après l'accrochage de la ou de chaque saillie (34) dans le renfoncement (33) qui lui correspond.

12. Alimenteur selon l'une quelconque des revendications 6 à 11, **caractérisé en ce que** le transporteur longitudinal (17) est supporté sur le moyen d'accouplement (20) autour d'un axe de pivotement (25) vertical ou légèrement incliné.

13. Alimenteur selon la revendication 12, **caractérisé en ce qu'**un moyen de pivotement (21) est associé au transporteur longitudinal (17), lequel est connecté au moyen d'accouplement (20) de manière à pouvoir pivoter autour de l'axe de pivotement (25), et le transporteur longitudinal (17) est connecté au moyen de pivotement (21) de manière à pouvoir pivoter autour d'un axe de basculement horizontal (22).

14. Alimenteur selon la revendication 13, **caractérisé en ce qu'**entre le moyen d'accouplement (20) et le moyen de pivotement (21) est prévu au moins un entraînement linéaire pour le pivotement latéral du transporteur longitudinal (17) avec le moyen de pivotement (21) autour de l'axe de pivotement (25), et entre le moyen de pivotement (21) et le transporteur longitudinal (17) est prévu au moins un entraînement linéaire pour le pivotement vers le haut et vers le bas du transporteur longitudinal (17) autour de l'axe de basculement (22).

15. Alimenteur selon l'une quelconque des revendications 6 à 14, **caractérisé en ce qu'**au transporteur longitudinal (17) est associé un entraînement pour son transporteur périphérique, l'entraînement étant éventuellement associé à une extrémité d'éjection (18) du transporteur longitudinal (17) orientée à l'écart du châssis (12).
